# EUROPEAN PATENT APPLICATION

(11) **EP 4 707 883 A1**
(43) Date of publication of application: **11.03.2026**
(21) Application number: 25150393.4
(22) Date of filing: 07.01.2025
(51) Int. Cl.: G02B 6/12, G02B 6/124, G02B 6/34, G02B 6/42

(54) **PHOTODETECTORS WITH AN INTEGRATED GRATING COUPLER**

(30) Priority: 05.09.2024 US 202418825081
(71) Applicant: GlobalFoundries U.S. Inc., Malta, NY 12020 (US)
(72) Inventor: ABOKETAF, Abdelsalam, Essex Junction, VT, 05452 (US); BIAN, Yusheng, Malta, NY, 12020 (US); LEE, Won Suk, Malta, NY, 12020 (US)
(74) Representative: Lambacher, Michael

(57) **Abstract**

Structures for a photonic chip that include a photodetector and a grating coupler, and methods of forming such structures. The structure comprises a photodetector including a semiconductor layer, and a grating coupler adjacent to the semiconductor layer of the photodetector. The structure further comprises a waveguide core including a portion that is laterally spaced from the grating coupler.

## Description

### BACKGROUND

The disclosure relates to photonic chips and, more specifically, to structures for a photonic chip that include a photodetector and a grating coupler, as well as methods of forming such structures.

Photonic chips find use in many applications and systems including, but not limited to, data communication systems and data computation systems. A photonic chip includes a photonic integrated circuit consisting of photonic components, such as modulators, polarizers, and optical couplers, that are used to manipulate light received from a light source, such as an optical fiber or a laser. A photodetector may be employed in the photonic integrated circuit to convert light, which may be modulated as an optical signal, into an electrical signal.

Improved structures for a photonic chip that include a photodetector and a grating coupler, as well as methods of forming such structures, are needed.

### SUMMARY

In an embodiment of the invention, a structure for a photonic chip is provided. The structure comprises a first photodetector including a first semiconductor layer, and a first grating coupler adjacent to the first semiconductor layer of the first photodetector. The structure further comprises a waveguide core including a first portion that is laterally spaced from the grating coupler.

According to one variant, the structure may further comprise a pad, wherein the first semiconductor layer may be positioned on the pad; the pad may include a first side edge, the first semiconductor layer may include a sidewall, and the first grating coupler may be positioned in the pad between the first side edge of the pad and the sidewall of the first semiconductor layer.

The pad may include a second side edge, and the first portion of the waveguide core may be positioned adjacent to the second side edge of the pad; further, the first portion of the waveguide core may be laterally spaced from the second side edge of the pad by a gap.

Further, the first grating coupler may include a plurality of grooves in the pad and a plurality of segments between the plurality of grooves; each groove may be disposed between an adjacent pair of the plurality of segments; the plurality of segments may be dimensioned and positioned to define a sub-wavelength grating, and the plurality of grooves may be filled by a dielectric material.

Further, the pad may include a first doped region of a first conductivity type, a second doped region of a second conductivity type different from the first conductivity type; the first semiconductor layer may be laterally positioned between the first doped region and the second doped region.

According to another variant, the structure may further comprise a pad, wherein the first semiconductor layer may be positioned on the pad; the pad may further include a first side edge, the first semiconductor layer may include a sidewall adjacent to the first side edge of the pad, and the first grating coupler may include a plurality of segments positioned adjacent to the first side edge of the pad. Further, the first side edge of the pad may be positioned between the plurality of segments and the sidewall of the first semiconductor layer.

Further, the first portion of the waveguide core may be laterally positioned adjacent to the plurality of segments of the first grating coupler; further, the first portion of the waveguide core may be laterally spaced from the plurality of segments of the first grating coupler by a gap.

Further, the first grating coupler may include a plurality of gaps between the plurality of segments; each gap may be disposed between an adjacent pair of the plurality of segments, the plurality of segments may be dimensioned and positioned to define a sub-wavelength grating, and the plurality of gaps may be filled by a dielectric material.

Further, the pad may include a first doped region of a first conductivity type, a second doped region of a second conductivity type different from the first conductivity type; the first semiconductor layer may be laterally positioned between the first doped region and the second doped region.

Independent of the above-mentioned variants, the structure may further comprise: a second photodetector including a second semiconductor layer; and a second grating coupler adjacent to the second semiconductor layer of the second photodetector, wherein the waveguide core may include a second portion that is laterally spaced from the second grating coupler.

Further, the first grating coupler may be configured to laterally couple light in a first wavelength band to the first semiconductor layer; the second grating coupler may be configured to laterally couple light of a second wavelength band to the second semiconductor layer, and the first wavelength band may differ from the second wavelength band.

Further, the first semiconductor layer may comprise germanium; additionally or alternatively, the first semiconductor layer may include a first longitudinal axis, the first grating coupler may include a second longitudinal axis and a plurality of segments aligned along the second longitudinal axis, and the second longitudinal axis may be parallel to the first longitudinal axis.

Further, the first grating coupler may be configured to provide contra-directional coupling of light from the first portion of the waveguide core to the first semiconductor layer of the first photodetector.

Further, the structure may further comprise a semiconductor substrate, and a dielectric layer disposed on the semiconductor substrate, wherein the waveguide core, the first photodetector, and the first grating coupler may be positioned on the dielectric layer.

In an embodiment of the invention, a method of forming a structure for a photonic chip is provided. The method comprises forming a photodetector including a semiconductor layer, forming a grating coupler adjacent to the semiconductor layer of the photodetector, and forming a waveguide core including a portion that is laterally spaced from the grating coupler.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a top view of a structure at an initial fabrication stage of a processing method in accordance with embodiments of the invention.
FIG. 2 is a cross-sectional view taken generally along line 2-2 in FIG. 1.
FIG. 2A is a cross-sectional view taken generally along line 2A-2A in FIG. 1.
FIG. 2B is a cross-sectional view taken generally along line 2B-2B in FIG. 1.
FIGS. 3, 3A, 3B are cross-sectional views of the structure at a fabrication stage of the processing method subsequent to FIGS. 1, 2, 2A, 2B.
FIG. 4 is a top view of a structure in accordance with alternative embodiments of the invention.
FIG. 5 is a diagrammatic top view of a structure in accordance with alternative embodiments of the invention.

### DETAILED DESCRIPTION

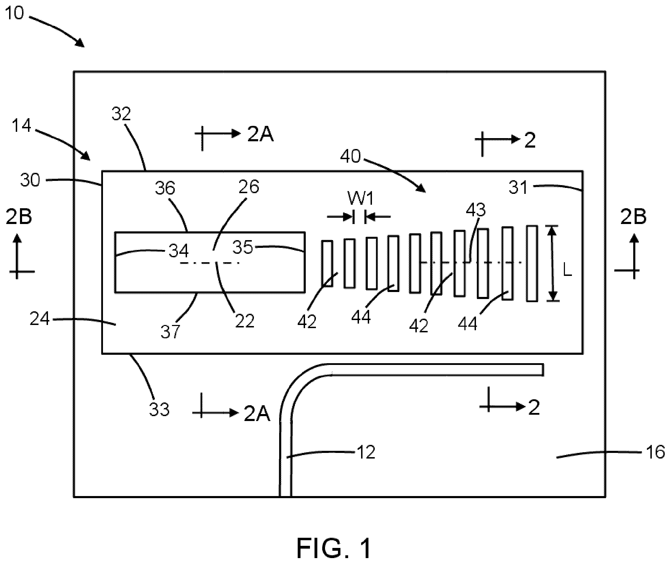

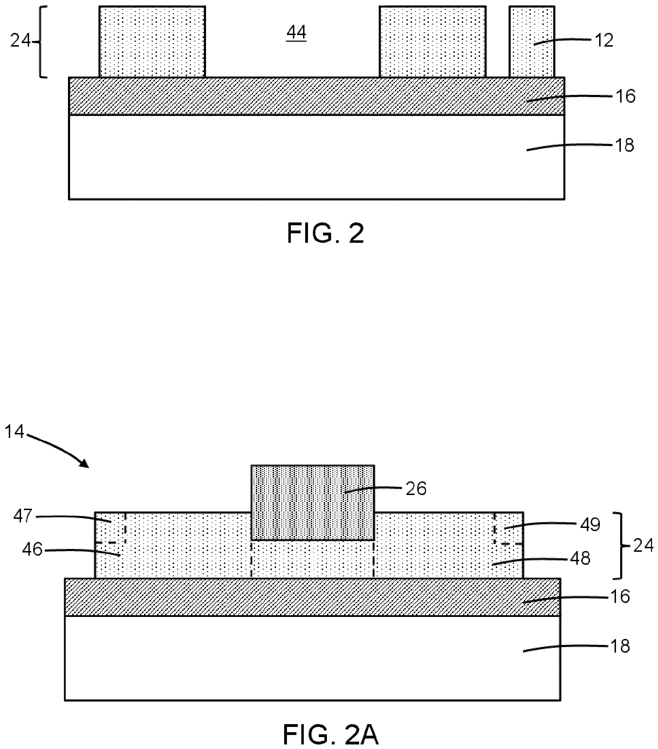

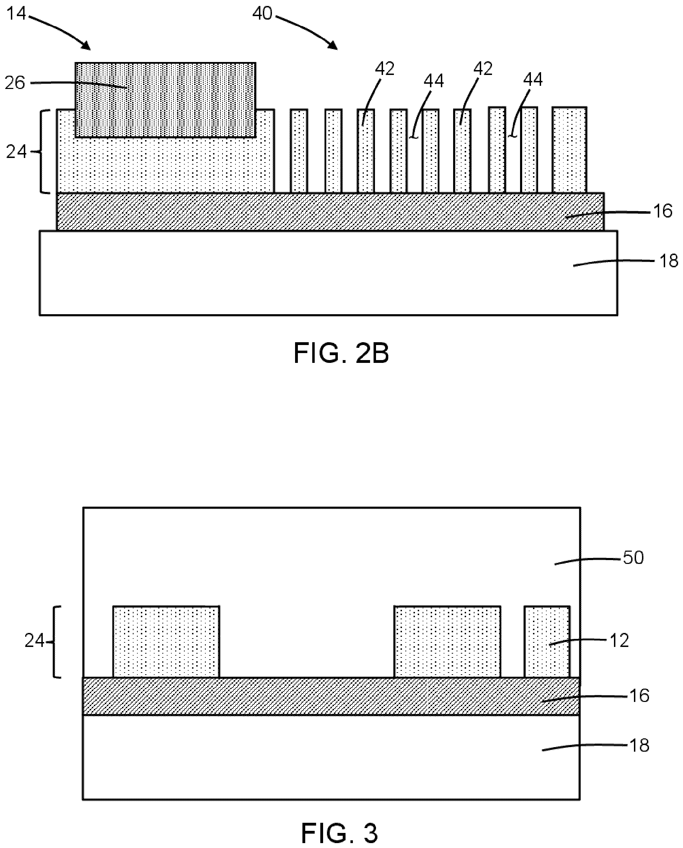

With reference to FIGS. 1, 2, 2A, 2B and in accordance with embodiments of the invention, a structure 10 includes a waveguide core 12 and a photodetector 14 that are positioned on, and above, a dielectric layer 16 and a semiconductor substrate 18. The dielectric layer 16 is disposed on the semiconductor substrate 18. In an embodiment, the dielectric layer 16 may be comprised of a dielectric material, such as silicon dioxide, and the semiconductor substrate 18 may be comprised of a semiconductor material, such as single-crystal silicon. In an embodiment, the dielectric layer 16 may be a buried oxide layer of a silicon-on-insulator substrate, and the dielectric layer 16 may provide low-index cladding.

The structure 10 includes a pad 24 having a side edge 30, a side edge 31 opposite from the side edge 30, a side edge 32, and a side edge 33 opposite from the side edge 32. The side edges 30, 31, 32, 33 may surround an outer perimeter of the pad 24, and the side edges 30, 31, 32, 33 may extend from a top surface of the pad 24 to a top surface of the dielectric layer 16.

The photodetector 14 includes a semiconductor layer 26 providing a light-absorbing layer that is disposed on the pad 24 with an inward spacing from the outer perimeter of the pad 24. The semiconductor layer 26 may have a perimeter surrounded by a sidewall 34, a sidewall 35 opposite from the sidewall 34, a sidewall 36, and a sidewall 37 opposite from the sidewall 36. The sidewall 34 is positioned adjacent to the side edge 30 of the pad 24, the sidewall 35 is spaced from the side edge 31 of the pad 24, the sidewall 36 is positioned adjacent to the side edge 32 of the pad 24, and the sidewall 37 is positioned adjacent to the side edge 33 of the pad 24. The semiconductor layer 26 extends along a longitudinal axis 22 from the sidewall 34 to the sidewall 35. A portion of the pad 24 is laterally positioned between the sidewall 36 of the semiconductor layer 26 and the side edge 32 of the pad 24. Another portion of the pad 24 is laterally positioned between the sidewall 37 of the semiconductor layer 26 and the side edge 33 of the pad 24.

The waveguide core 12 includes a portion that is disposed laterally adjacent to the side edge 33 of the pad 24. The pad 24 may incorporate a grating coupler 40 that is configured to receive light that is laterally coupled from the laterally-adjacent portion of the waveguide core 12 and to transfer the light to photodetector 14. The grating coupler 40 is positioned on, and above, the dielectric layer 16 and the semiconductor substrate 18, and may be located in the same horizontal plane as the waveguide core 12. The grating coupler 40 is positioned between the sidewall 35 of the semiconductor layer 26 and the side edge 31 of the pad 24.

The grating coupler 40 includes segments 42 and grooves 44 that are positioned in a group adjacent to the semiconductor layer 26. The grooves 44, which have a width dimension Wl, may represent perforations in the pad 24 that penetrate fully through the pad 24 to the dielectric layer 16. The segments 42 and grooves 44 may be arranged with one of the grooves 44 laterally between each adjacent pair of segments 42. In an embodiment, the length dimension L of the segments 42 and grooves 44 may increase with increasing distance from the semiconductor layer 26 such that the narrowest segment 42 and the narrowest groove 44 are in closest proximity to the sidewall 35 of the semiconductor layer 26. The segments 42 may be aligned along a longitudinal axis 43. In an embodiment, the longitudinal axis 43 may be aligned parallel to the longitudinal axis 22 of the semiconductor layer 26.

The segments 42 of the grating coupler 40 may be dimensioned and positioned at small enough pitch so as to define a sub-wavelength Bragg grating. For example, the periodicity of the segments 42 may be less than one-half the wavelength of the light propagating in the waveguide core 12. In an embodiment, the pitch and duty cycle determining the dimensions and positions of the segments 42 may be uniform. In alternative embodiments, the pitch and the duty cycle of the segments 42 may be aperiodic (i.e., non-uniform).

In an embodiment, the waveguide core 12 and the pad 24 may be comprised of a material having a refractive index that is greater than the refractive index of silicon dioxide. In an embodiment, the waveguide core 12 and the pad 24 may be comprised of a semiconductor material. In an embodiment, the waveguide core 12 and the pad 24 may be comprised of single-crystal silicon. The waveguide core 12 and the pad 24 of the photodetector 14 may be formed by patterning a layer comprised of their constituent material with lithography and etching processes. The grooves 44 may be formed when the pad 24 is patterned to define the side edges 30, 31, 32, 33. In an embodiment, the waveguide core 12 and the pad 24 of the photodetector 14 may be formed by patterning the semiconductor material, such as single-crystal silicon, of a device layer of a silicon-on-insulator substrate.

The semiconductor layer 26 is comprised of a light-absorbing material that is capable of photoelectric conversion by converting the photon energy of light into electrical signal. In an embodiment, the semiconductor layer 26 may be comprised of an intrinsic semiconductor material. In an embodiment, the semiconductor layer 26 may be comprised of intrinsic germanium. In an embodiment, the semiconductor layer 26 may be comprised of intrinsic silicon-germanium. In an alternative embodiment, the semiconductor layer 26 may be comprised of a different type of semiconductor material, such as a III-V compound semiconductor material or intrinsic silicon.

The photodetector 14 may include a doped region 46 that is formed between the side edge 32 of the pad 24 and the sidewall 36 of the semiconductor layer 26. The photodetector 14 may include a doped region 48 that is formed between the side edge 33 of the pad 24 and the sidewall 37 of the semiconductor layer 26. The doped region 46 may differ in conductivity type from the doped region 48. The semiconductor layer 26 is laterally positioned on the pad 24 between the doped region 46 and the doped region 48. The doped regions 46, 48 may extend fully through the entire thickness of the pad 24 to the underlying dielectric layer 16. In an embodiment, the doped region 46 may define an anode of the photodetector 14 and the doped region 48 may define a cathode of the photodetector 14. In an alternative embodiment, the doped region 46 may define a cathode of the photodetector 14 and the doped region 48 may define an anode of the photodetector 14.

The doped region 46 may be formed by, for example, ion implantation with an implantation mask having an opening that determines the implanted area of the pad 24. The implantation mask may include a layer of photoresist applied by a spin-coating process, prebaked, exposed to light projected through a photomask, baked after exposure, and developed with a chemical developer to define the opening over the areas of the pad 24 to be implanted. The implantation conditions, such as ion species, dose, and kinetic energy, may be selected to tune the electrical and physical characteristics of the doped region 46. The implantation mask may be stripped after forming the doped region 46. In an embodiment, the semiconductor material of the doped region 46 may contain a p-type dopant, such as boron, that provides p-type electrical conductivity. In an alternative embodiment, the semiconductor material of the doped region 46 may contain an n-type dopant, such as phosphorus or arsenic, that provides n-type electrical conductivity. In an alternative embodiment, a portion of the semiconductor layer 26 immediately adjacent to the doped region 46 may also be implanted due to partial overlap of the opening in the implantation mask with the semiconductor layer 26.

The doped region 48 may be formed by, for example, ion implantation with an implantation mask having an opening that determines an implanted area of the pad 24. The implantation mask may include a layer of photoresist applied by a spin-coating process, prebaked, exposed to light projected through a photomask, baked after exposure, and developed with a chemical developer to define the opening over the area of the pad 24 to be implanted. The implantation conditions, such as ion species, dose, and kinetic energy, may be selected to tune the electrical and physical characteristics of the doped region 48. The implantation mask may be stripped after forming the doped region 48. In an embodiment, the semiconductor material of the doped region 48 may contain an n-type dopant, such as phosphorus or arsenic, that provides n-type electrical conductivity if the doped region 46 contains a p-type dopant. In an alternative embodiment, the semiconductor material of the doped region 48 may contain a p-type dopant, such as boron, that provides p-type electrical conductivity if the doped region 46 contains an n-type dopant. In an alternative embodiment, portions of the semiconductor layer 26 immediately adjacent to the doped region 48 may also be implanted due to partial overlap of the opening in the implantation mask with the semiconductor layer 26.

A portion of the pad 24 beneath the semiconductor layer 26 may be comprised of intrinsic semiconductor material, such as intrinsic silicon, that is not doped by the ion implantation forming the doped region 46 and the ion implantation forming doped region 48. The doped region 46, the intrinsic semiconductor materials of the semiconductor layer 26 and the portion of the pad 24 beneath the semiconductor layer 26, and the doped region 48 may define a lateral p-i-n diode that contributes to the functionality of the photodetector 14.

A heavily-doped region 47 may be formed by a masked ion implantation in a portion of the doped region 46 adjacent to the side edge 32 of the pad 24 and a heavily-doped region 49 may be formed by the masked ion implantation in a portion of the doped region 48 adjacent to the side edge 33 of the pad 24. The heavily-doped region 47 may have the same conductivity type as the doped region 46 but at a higher dopant concentration. The heavily-doped region 49 may have the same conductivity type as the doped region 48 but at a higher dopant concentration.

In an alternative embodiment, the photodetector 14 may have a vertical arrangement instead of a lateral arrangement. Specifically, in the vertical arrangement, the doped region 46 and heavily-doped region 47 may be arranged in the pad 24 on one, or both, sides of the semiconductor layer 28, and the doped region 48 and heavily-doped region 49 may be arranged in an upper portion of the semiconductor layer 28. In an alternative embodiment, the photodetector 14 may be configured as an avalanche photodetector that includes an intrinsic semiconductor region in the pad 24 defining a multiplication region and an additional doped region in the pad 24 defining a charge control region.

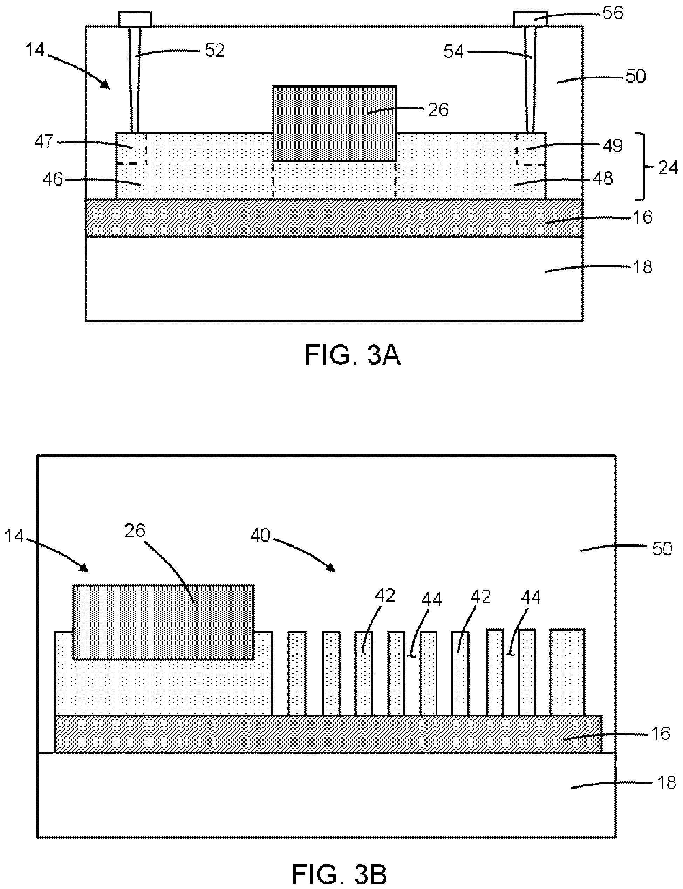

With reference to FIGS. 3, 3A, 3B in which like reference numerals refer to like features in FIGS. 1, 2, 2A, 2B and at a subsequent fabrication stage, a dielectric layer 50 may be formed over the waveguide core 12, the photodetector 14, and the grating coupler 40. The dielectric layer 50 may be comprised of a dielectric material, such as silicon dioxide, that is deposited and then planarized following deposition. The dielectric material constituting the dielectric layer 50 may have a refractive index that is less than the refractive index of the material constituting the waveguide core 12 and pad 24. One or more conformal dielectric layers (not shown) may be formed over the photodetector 14 before forming the dielectric layer 50.

The dielectric material of the dielectric layer 50 may be positioned in the grooves 44 between the segments 42 such that a metamaterial structure may be defined as a region of the pad 24 in which the material constituting the segments 42 has a higher refractive index than the dielectric material of the dielectric layer 50. The metamaterial structure can be treated as a homogeneous material having an effective refractive index that is intermediate between the refractive index of the material constituting the segments 42 and the refractive index of the dielectric material constituting the dielectric layer 50.

Contacts 52 may be formed that penetrate fully through the dielectric layer 50 to land on the heavily-doped region 47. Contacts 54 may be formed that penetrate fully through the dielectric layer 50 to land on the heavily-doped region 49. The heavily-doped region 47 electrically couples the contacts 52 to the doped region 46. The heavily-doped region 49 electrically couples the contacts 54 to the doped region 48. The contacts 52, 54 may be comprised of a metal, such as tungsten. The doped region 46 and the doped region 48 may be biased through the contacts 52, 54, which may be coupled to interconnects 56 formed as metallization in interlayer dielectric layers (not shown) formed over the dielectric layer 50.

In use, light, such as laser light, propagates in the waveguide core 12 to the vicinity of the grating coupler 40 and is laterally coupled from the waveguide core 12 to the grating coupler 40. In an embodiment, the light received by the photodetector 14 from the waveguide cores 12, 13 may be modulated as an optical signal. The grating coupler 40 reflects the light in a direction counter to the direction of propagation in the waveguide core 12 and into the semiconductor layer 26 of the photodetector 14. The semiconductor layer 26 absorbs photons of the light and convert the absorbed photons into charge carriers by photoelectric conversion. The biasing of the doped regions 46, 48 causes the charge carriers to be collected and output from the photodetector 14 to provide, as a function of time, a measurable photocurrent.

The structure 10 may rely on subwavelength contra-directional coupling of light by the grating coupler 40 from the waveguide core 12 to photodetector 14. The contra-directional coupling of light to the grating coupler 40 may be characterized by high wavelength selectivity and a high coupling efficiency. The grating coupler 40 may be configured to reflect light within a selected wavelength band and with a peak optical power that can be selected through the configuration of the segments 42 and grooves 44. The grating coupler 40 of the structure 10 is a passive photonic component that does not require powering or a large footprint in order to function to provide wavelength selectivity when supplying light to the photodetector 14. In the latter regard, the structure 10 differs from a Mach-Zehnder interferometer lattice, which may be employed for wavelength-division-multiplexing, that has a significantly larger footprint.

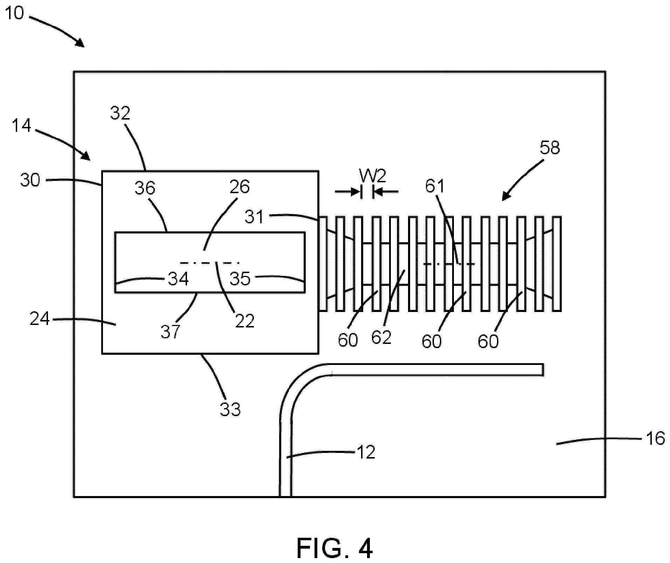

With reference to FIG. 4 and in accordance with alternative embodiments, a grating coupler 58 may be formed with segments 60 and a rib 62 that overlaps with the segments 60. The grating coupler 58 is configured to receive light that is laterally coupled from the waveguide core 12 and to direct the light to photodetector 14. The grating coupler 58 is positioned adjacent to the sidewall 35 of the semiconductor layer 26 and the side edge 31 of the pad 24. Adjacent pairs of segments 60 are separated by gaps having a width dimension W2 that is bridged by the rib 62. The segments 60 may be arranged with one of the gaps laterally between each adjacent pair of segments 60. In an embodiment, the width dimension W2 of the segments 60 may be constant and the width dimension of the rib 62 may vary over the length of the grating coupler 58. The segments 60 may be aligned along a longitudinal axis 61, and the longitudinal axis 61 may be aligned parallel to the longitudinal axis 22 of the semiconductor layer 26.

The segments 60 of the grating coupler 58 may be dimensioned and positioned at small enough pitch so as to define a sub-wavelength grating. For example, the periodicity of the segments 60 may be less than one-half the wavelength of the light propagating in the waveguide core 12. In an embodiment, the pitch and duty cycle of the segments 60 may be uniform. In alternative embodiments, the pitch and the duty cycle of the segments 60 may be aperiodic (i.e., non-uniform).

The gaps between the segments 60 may be filled by the dielectric material of the subsequently-deposited dielectric layer 50 such that a metamaterial structure may be defined by the grating coupler 58 in which the material constituting the segments 60 has a higher refractive index than the dielectric material of the dielectric layer 50. The metamaterial structure can be treated as a homogeneous material having an effective refractive index that is intermediate between the refractive index of the material constituting the segments 60 and the refractive index of the dielectric material constituting the dielectric layer 50.

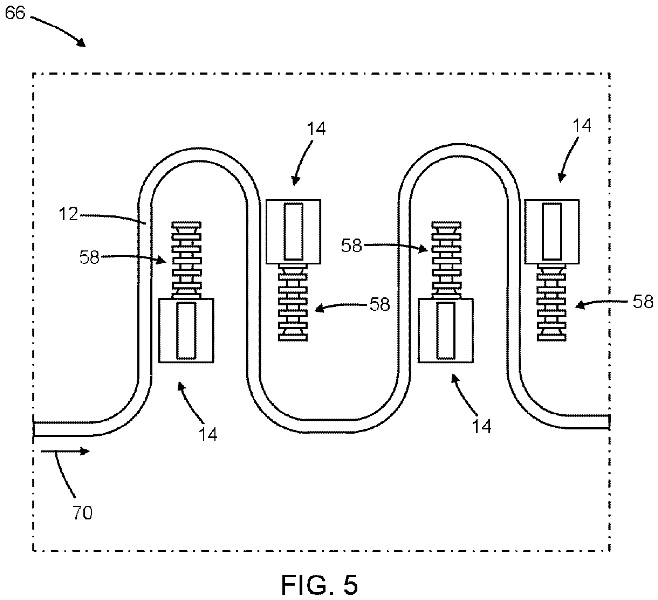

With reference to FIG. 5 and in accordance with alternative embodiments, a wavelength-division-multiplexing receiver 66 may be constructed as a multiple-channel device that includes multiple instances of the structure 10 including the grating coupler 58 and the photodetector 14. The waveguide core 12 is routed in the layout of the wavelength-division-multiplexing receiver 66 to have respective portions adjacent to the different instances of the grating coupler 58. The wavelength-division-multiplexing receiver 66 may receive multiplexed light 70 propagating in the waveguide core 12 that includes optical signals of multiple different wavelengths, such as multiple different wavelengths within the near infrared portion of the electromagnetic spectrum. Each grating coupler 58 may be configured by, for example, selecting the pitch and duty cycle, which determines the dimensions and positions of the segments 42, to laterally couple optical power of a particular wavelength among the different wavelengths of the multiplexed light 70. In this manner, the instances of the grating coupler 58 and photodetector 14 may enable the separation of optical power characterized by each of the different wavelengths to a different channel of the multiple-channel device.

In an alternative embodiment, the wavelength-division-multiplexing receiver 66 may include multiple instances of the structure 10 having the grating coupler 40 (FIG. 1) in addition to the photodetector 14.

The reliance upon the instances of the grating coupler 58 may permit the wavelength-division-multiplexing receiver 66 to have a compact footprint in comparison with other types of wavelength-division-multiplexing receivers such as those dependent upon a Mach-Zehnder interferometer lattice. The grating couplers 58 provide passive photonic components that furnish the wavelength selectivity. Each instance of the grating coupler 58 and photodetector 14 integrates photodetection and wavelength filtering into an integral photonic component.

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or in "direct contact" with another feature if intervening features are absent. A feature may be "indirectly on" or in "indirect contact" with another feature if at least one intervening feature is present. Different features may "overlap" if a feature extends over, and covers a part of, another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A structure for a photonic chip, the structure comprising:
a first photodetector including a first semiconductor layer;
a first grating coupler adjacent to the first semiconductor layer of the first photodetector; and
a waveguide core including a first portion that is laterally spaced from the first grating coupler.

2. The structure of claim 1 further comprising:
a pad,
wherein the first semiconductor layer is positioned on the pad, the pad includes a first side edge, the first semiconductor layer includes a sidewall, and the first grating coupler is positioned in the pad between the first side edge of the pad and the sidewall of the first semiconductor layer.

3. The structure of claim 2 wherein the pad includes a second side edge, and the first portion of the waveguide core is positioned adjacent to the second side edge of the pad, and, optionally, wherein the first portion of the waveguide core is laterally spaced from the second side edge of the pad by a gap.

4. The structure of claim 2 or claim 3 wherein the first grating coupler includes a plurality of grooves in the pad and a plurality of segments between the plurality of grooves, and each groove is disposed between an adjacent pair of the plurality of segments, and, optionally, wherein the plurality of segments are dimensioned and positioned to define a sub-wavelength grating, and the plurality of grooves are filled by a dielectric material.

5. The structure of one of claims 2 to 4 wherein the pad includes a first doped region of a first conductivity type, a second doped region of a second conductivity type different from the first conductivity type, and the first semiconductor layer is laterally positioned between the first doped region and the second doped region.

6. The structure of claim 1 further comprising:
a pad,
wherein the first semiconductor layer is positioned on the pad, the pad includes a first side edge, the first semiconductor layer includes a sidewall adjacent to the first side edge of the pad, and the first grating coupler includes a plurality of segments positioned adjacent to the first side edge of the pad.

7. The structure of claim 6 wherein the first side edge of the pad is positioned between the plurality of segments and the sidewall of the first semiconductor layer.

8. The structure of claim 6 or claim 7 wherein the first portion of the waveguide core is laterally positioned adjacent to the plurality of segments of the first grating coupler, and, optionally, wherein the first portion of the waveguide core is laterally spaced from the plurality of segments of the first grating coupler by a gap.

9. The structure of one of claims 6 to 8 wherein the first grating coupler includes a plurality of gaps between the plurality of segments, each gap is disposed between an adjacent pair of the plurality of segments, the plurality of segments are dimensioned and positioned to define a sub-wavelength grating, and the plurality of gaps are filled by a dielectric material.

10. The structure of one of claims 6 to 9 wherein the pad includes a first doped region of a first conductivity type, a second doped region of a second conductivity type different from the first conductivity type, and the first semiconductor layer is laterally positioned between the first doped region and the second doped region.

11. The structure of one of claims 1 to 10 further comprising:
a second photodetector including a second semiconductor layer; and
a second grating coupler adjacent to the second semiconductor layer of the second photodetector,
wherein the waveguide core includes a second portion that is laterally spaced from the second grating coupler.

12. The structure of claim 11 wherein the first grating coupler is configured to laterally couple light in a first wavelength band to the first semiconductor layer, the second grating coupler is configured to laterally couple light of a second wavelength band to the second semiconductor layer, and the first wavelength band differs from the second wavelength band.

13. The structure of one of claims 1 to 12 wherein the first semiconductor layer comprises germanium, and/or wherein the first semiconductor layer includes a first longitudinal axis, the first grating coupler includes a second longitudinal axis and a plurality of segments aligned along the second longitudinal axis, and the second longitudinal axis is parallel to the first longitudinal axis, and/or wherein the first grating coupler is configured to provide contra-directional coupling of light from the first portion of the waveguide core to the first semiconductor layer of the first photodetector.

14. The structure of one of claims 1 to 13 further comprising:
a semiconductor substrate; and
a dielectric layer disposed on the semiconductor substrate,
wherein the waveguide core, the first photodetector, and the first grating coupler are positioned on the dielectric layer.

15. A method of forming a structure for a photonic chip, the method comprising:
forming a photodetector including a semiconductor layer;
forming a grating coupler adjacent to the semiconductor layer of the photodetector; and
forming a waveguide core including a portion that is laterally spaced from the grating coupler.
